# EUROPEAN PATENT APPLICATION

(11) **EP 2 026 324 A2**
(43) Date of publication of application: **18.02.2009**
(21) Application number: 08014508.9
(22) Date of filing: 14.08.2008
(51) Int. Cl.: G09G 5/37, G06F 3/14

(54) **Image processing circuit, display device, and printing device**

(30) Priority: 14.08.2007 JP 2007211254
(71) Applicant: Seiko Epson Corporation, Shinjuku-ku Tokyo 163-0811 (JP)
(72) Inventor: Ono, Yoshiyuki, Nagano 392-8502 (JP); Sawazaki, Takashi, Nagano 392-8502 (JP); Saito, Akira, Kanagawa-ken 214-0034 (JP)
(74) Representative: HOFFMANN EITLE

(57) **Abstract**

An image processing circuit (250) for carrying out a hatching processing. A storage means (H) stores positions of pixels constituting a shape-image to be regularly-arranged and pixel values (R0,R1) of the pixels. If a pixel value of a first pixel constituting an image represented by input binary image data, the pixel value of the first pixel being expressible by one value or another value, one of the values being 0, and a pixel value of a second pixel constituting the shape-image and arranged at a position corresponding to a position of the first pixel is a predetermined value, a conversion means (S1) converts the pixel value of the first pixel into 0 and outputting a pixel value 0; and if the pixel value of the first pixel is 0, or if the pixel value of the first pixel is a value other than 0, and the pixel value of the second pixel is a value other than the predetermined value, directly outputting the pixel value of the first pixel. A first multiplication means (MU0) multiplies the pixel value of the second pixel by the pixel value output from the conversion means, and outputs a resultant value. An inversion means (SU) inverts the pixel value output from the conversion means and outputs a resultant value and a second multiplication means (MU1) multiplies the pixel value of the first pixel or a pixel value of a third pixel constituting a background part of the image represented by the binary image data by the value output from the inversion means, and outputs a resultant value. An adding means (AD) adds up the value output from the first multiplication means and the value output from the second multiplication means, and outputs a resultant value as output image data.

## Description

### Background

1. Technical Field

The present invention relates to a technique for laying out plural shapes in an array within an image area.

2 Related Art

In the field of image processing, there is a technique known as hatching processing. Hatching processing involves the laying out of plural shapes in an array within an image area which is defined as a text area, a table, or a figure. In other words, the technique of hatching processing is a process of patterning or a form of shading. For example, JP-A-5-210381 discloses a technique for rapidly developing a hatching pattern on a frame memory by using a BiTBLT (bit boundary/block transfer) circuit which repeatedly transfers a block pattern for hatching within a specified area.

In the hatching processing as described above, it is necessary to employ wide variations of hatchings to suit different purposes. For example, hatching of a desired color on a specified area of a text image is performed in a manner that a background image behind the text image is seen through each of the areas in a hatching pattern. A striking effect can be attained from hatching processing as described above, as a result of which hatching is widely used. However, such a hatching processing cannot be achieved only by the technique disclosed in the aforementioned JP-A-5-210381 since this technique simply develops a predetermined block pattern in a specified area.

### Summary

An aspect of the present invention provides a mechanism for laying out plural shape-images within a specified area in an input image and for performing a hatching processing which allows a background image to be seen through a part of the specified area.

A first aspect of the present invention provides an image processing circuit comprising: a storage means for storing positions of pixels constituting a shape-image to be regularly-arranged and pixel values of the pixels; a conversion means for: if a pixel value of a first pixel constituting an image represented by input binary image data, the pixel value of the first pixel being expressible by one value or another value, one of the values being 0, and a pixel value of a second pixel constituting the shape-image and arranged at a position corresponding to a position of the first pixel is a predetermined value, converting the pixel value of the first pixel into 0 and outputting a pixel value 0; and if the pixel value of the first pixel is 0, or if the pixel value of the first pixel is a value other than 0, and the pixel value of the second pixel is a value other than the predetermined value, directly outputting the pixel value of the first pixel; a first multiplication means for multiplying the pixel value of the second pixel by the pixel value output from the conversion means, and outputting a resultant value; an inversion means for inverting the pixel value output from the conversion means and outputting a resultant value; a second multiplication means for multiplying the pixel value of the first pixel or a pixel value of a third pixel constituting a background part of the image represented by the binary image data by the value output from the inversion means, and outputting a resultant value; and an adding means for adding up the value output from the first multiplication means and the value output from the second multiplication means, and outputting a resultant value as output image data.

Accordingly, a hatching processing can be achieved so that plural shape-images are arrayed only in specified areas of an image expressed by binary image data, and a background image is seen through parts of the specified areas.

The image processing circuit may further comprise an operation mode specifying means for specifying a transparent mode or a non-transparent mode as an operation mode, and the conversion means may, if the non-transparent mode is specified by the operation mode specifying means, directly output the pixel value of the first pixel, if the transparent mode is specified by the operation mode specifying means, and if the pixel value of the first pixel is a value other than 0, and the pixel value of the second pixel is the predetermined value, convert the pixel value of the first pixel into 0 and output a pixel value 0, and if the transparent mode is specified by the operation mode specifying means, and if the pixel value of the first pixel is 0, or if the pixel value of the first pixel is a value other than 0, and the pixel value of the second pixel is a value other than the predetermined value, directly output the pixel value of the first pixel.

Accordingly, one of a transparent mode or a non-transparent mode can be specified as an operation mode of the image processing circuit. In the transparent mode, pixel values included in binary image data are converted so that a background image is seen through parts of specified areas of an image. In the non-transparent mode, such a conversion is not performed on pixel values included in binary image data.

Alternatively, in the image processing circuit, the storage means may comprise: a first storage means for storing the pixel values of the pixels constituting the shape-image; a second storage means for storing color information indicating a color constituting the shape-image as the pixel values of the pixels; a color information output means for outputting the color information stored in the second storage means, as the pixel value of the second pixel.

Accordingly, shape-images of a color indicated by color information stored in the second storage means can be laid out in an array in specified areas of an image expressed by binary image data.

Alternatively, in the image processing circuit, the storage means may comprise: a first storage means for storing the pixel values of the pixels constituting the shape-image; a second storage means for storing color information indicating a color constituting the shape-image, the color information being associated with a pixel value; and a color information output means for outputting the color information stored in the second storage means in association with the pixel value of the second pixel, as the pixel value of the second pixel.

Accordingly, shape-images of one single type and one single color can be laid out arrayed in specified areas of an image expressed by binary image data.

Alternatively, the image processing circuit may further comprise: a specifying means for specifying the pixel value of the first pixel or the pixel value of the third pixel; and a supply means for providing the pixel value specified by the specifying means to the second multiplication means.

Accordingly, pixel values at respective pixel positions which are included in binary image data or pixel values at respective pixel positions which are included in background image data expressing a background image for the binary image data can be specified as pixel values for background areas in an output image expressed by output image data.

Alternatively, the image processing circuit may further comprise: a specifying means for specifying a third storage means for storing predetermined background color information or a fourth storage means for storing image information to be output to a display means or a printing means; and a supply means for retrieving the information stored in the storage means specified by the specifying means as the pixel value of the third pixel, and providing the information to the second multiplication means.

Accordingly, a third storage means which stores predetermined background color information, or a fourth storage means which stores image information to be output to a display means or a printing means can be specified as a storage means as a supply source which supplies pixel values for background areas in an output image expressed by output image data.

A second aspect of the present invention provides a display device comprising: the image processing circuit according to the first aspect of the present invention; and a display means for displaying an image on the basis of the output image data output from the adding means.

Accordingly, a hatching processing can be achieved so that plural shape-images are arrayed only in specified areas of an image expressed by binary image data, and that a background image is seen through parts of the specified areas. Further, an image obtained as a result of the hatching processing can be displayed.

A third aspect of the present invention provides a printing device comprising: the image processing circuit according to the first aspect of the present invention; and a printing means for forming an image on a recording medium on the basis of the output image data output from the adding means.

Accordingly, a hatching processing can be achieved so that plural shape-images are arrayed only in specified areas of an image expressed by binary image data, and that a background image is seen through parts of the specified areas. Further, an image which is obtained as a result of the hatching processing can be printed out.

### Brief Description of the Drawings

FIG 1 is shows a structure of an image forming device 1;

FIG 2 shows a structure of a hatching circuit 250;

FIG 3 shows hatching pattern data for performing hatching of a vertically striped pattern;

FIG 4 shows an example of an image expressed by input image data;

FIG 5 illustrates operations of selectors S0 and S 1 and a multiplier MU0;

FIG 6 illustrates operations of a subtracter SU and a multiplier MU1;

FIG 7 illustrates an operation of an adder AD;

FIG 8 shows an output image displayed on the memory liquid crystal display 15;

FIGS. 9A, 9B, and 9C respectively show a hatching pattern, an input image, and an output image, according to a modification;

FIG 10 shows a structure of a hatching circuit 251 according to a modification;

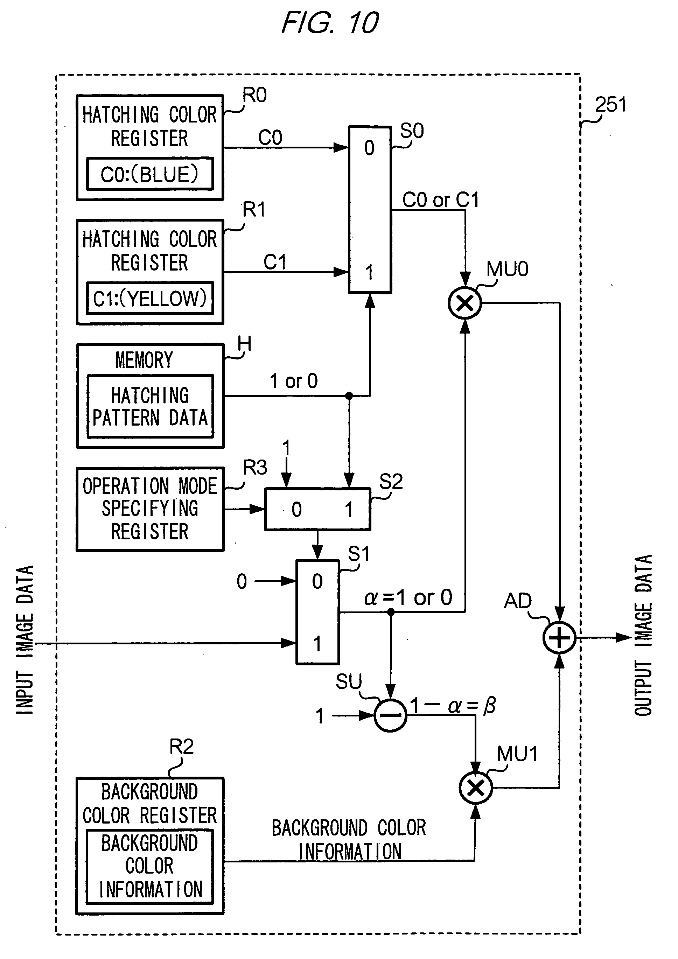

FIG 10 shows a structure of a hatching circuit 252 according to another modification; and

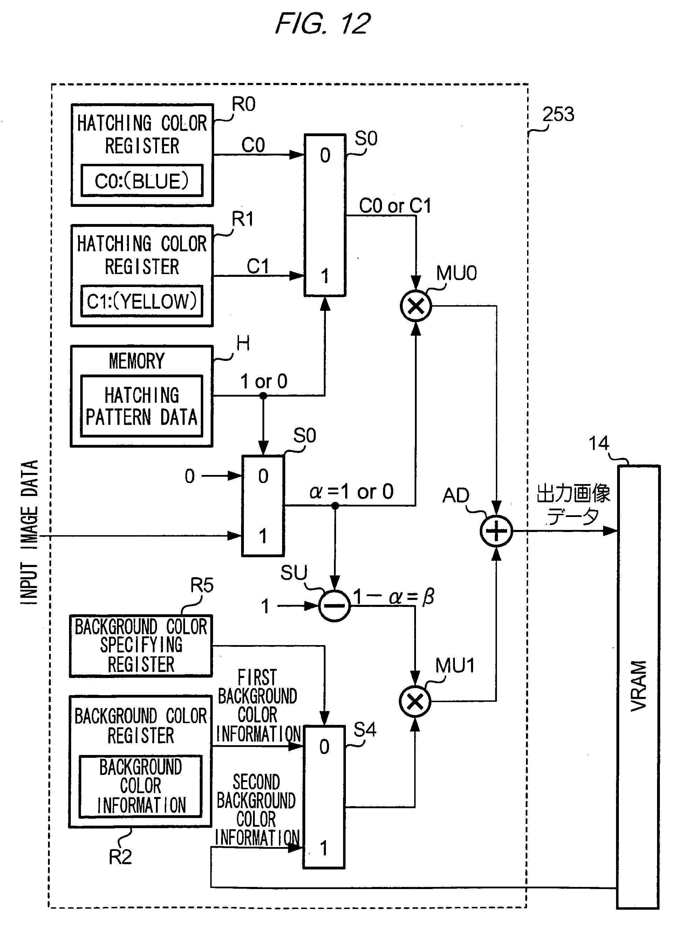

FIG 12 shows a structure of a hatching circuit 253 according to yet another modification.

### Description of Exemplary Embodiments

Exemplary Embodiment.

In an exemplary embodiment described below, a processing for laying out plural shape-images arrayed in an image area will be referred to as "hatching". The plural shape-images which are arrayed in this processing may all be the same as each other or different from each other. For example, a form of hatching known as "oblique line shading" can be achieved by laying out repeatedly at uniform intervals, line segment images extending in one identical direction. Another form of hatching commonly known as "cross shading" can be achieved by laying out repeatedly at uniform intervals, line segment images, respectively extending in two different directions. Yet another form of hatching can be achieved by laying out alternating shapes of a heart and a clover or by randomly laying out abstract shapes which are all different from each other. That is, shape-images used for hatching can be of any size or form, and any number of shape-images may be used for hatchings.

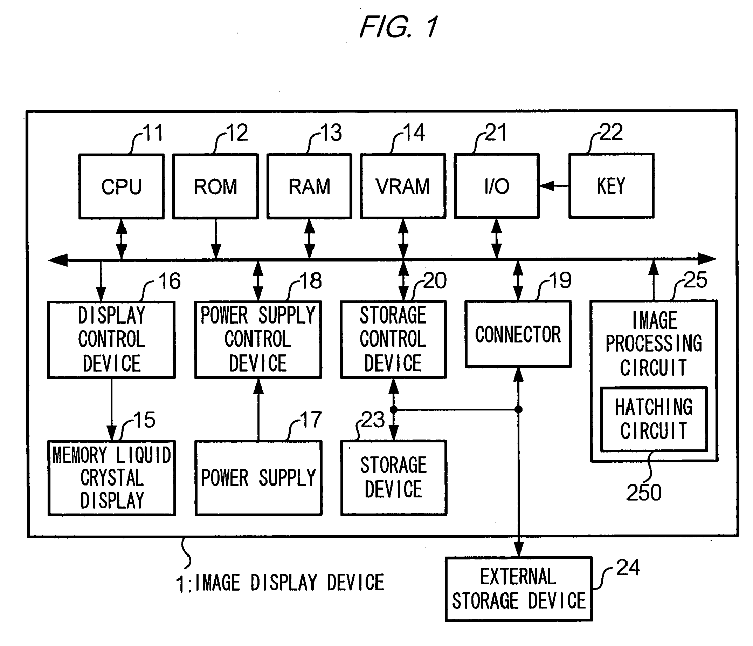

FIG. 1 shows a structure of an image display device 1 according to the exemplary embodiment.

As shown in the figure, the image display device 1 includes a CPU (Central Processing Unit) 11, a ROM (Read Only Memory) 12, a RAM (Random Access Memory) 13, a VRAM (Video Random Access Memory) 14, an image retaining liquid crystal display 15, a display control device 16, a power supply 17, a power supply control device 18, a connector 19, a storage control device 20, an I/O 21, a key 22, a storage device 23, and an image processing circuit 25. The CPU 11 reads a control program stored in the ROM 12 and develops the program on the RAM 13. The CPU 11 executes processings in accordance with procedures written in the control program.
The key 22 is a manipulator operated by a user and includes a manipulation device such as a pen device or a joy stick. The I/O 21 monitors a manipulation status of the key 22, and supplies the CPU 11 with a signal corresponding to a manipulation on the key 22 as the user manipulates the key 22. The power supply 17 is, for example, a rechargeable battery, and the power supply control device 18 performs various power supply controls, such as switching on/off of the power supply 17 and monitoring of residual power.

A portable external storage device 24 such as a removable medium is attachable or detachable to/from the connecter 19. The external storage device 24 may be for example, a card-type storage medium incorporating a flash memory, such as an SD (Secure Digital) card, or may be a disk-type storage medium using a magnetic medium, such as a flexible disk. The storage device 23 is a non-volatile storage medium such as a flash memory or a hard disk, and is included in the image display device 1. The storage device 23 or the external storage device 24 store image data expressing text (letters), graphics (shapes), and images (photographs). The image data is binary data constituted of pixel values "0" and "1" which respectively indicate white and black. An area which is given a pixel value "1" is a specified area in an image. An area which is given a pixel value "0" is an unspecified area (i.e., a background area). The storage control device 20 reads image data from the storage device 23 or the external storage device 24 and supplies the image data for the image processing circuit 25, in accordance with instructions from the CPU 11.

The image processing circuit 25 has a hatching circuit 250. The hatching circuit 250 performs a hatching on image data supplied in accordance with an instruction from the CPU 11, so that a background image is seen through an area which is cut out by using a hatching pattern. Further, the hatching circuit 250 outputs the image data subjected to the hatching to the VRAM 14. The VRAM 14 is a frame buffer and stores a part of image data which is equivalent to one page to be displayed on the memory liquid crystal display 15. The memory liquid crystal display 15 is a display unit which utilizes cholesteric liquid crystal or electrophoresis. The memory liquid crystal display 15 has a memory ability to maintain a displayed image even after supply of electric power stops. The part of image data stored in the VRAM 14 is supplied to the display control device 16 under an instruction from the CPU 11. The display control device 16 controls the memory liquid crystal display 15 to show an image based on the supplied part of image data.

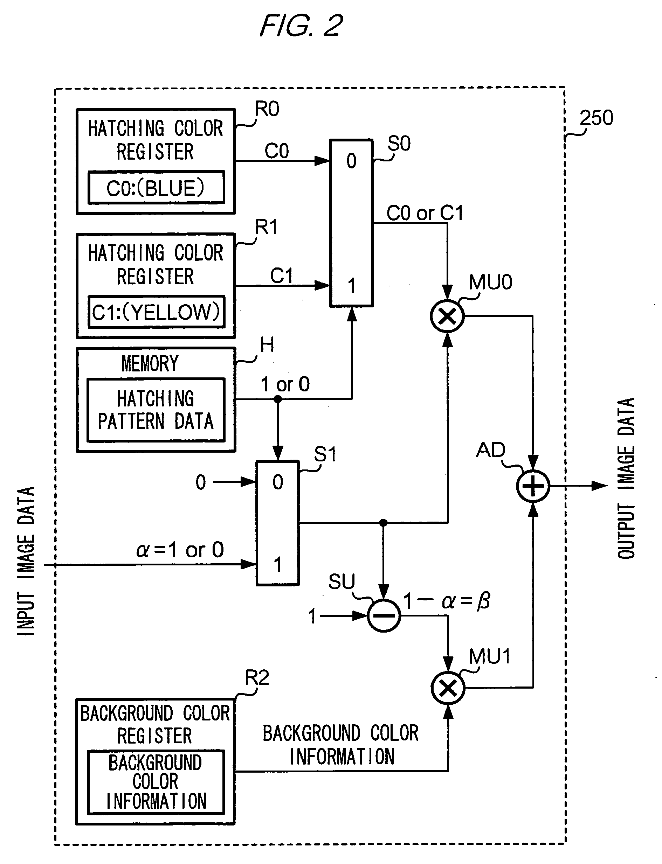

Next, FIG 2 shows a structure of the hatching circuit 250.

As shown in the figure, the hatching circuit 250 has a memory H, hatching color registers R0 and R1, a background color register R2, selectors S0 and S1, multipliers MU0 and MU1, a subtracter subjected to line-thinning, and an adder AD. The hatching circuit 250 is input with binary image data, as input image data, which is read from the storage device 23 or the external storage device 24. In the input image data, a pixel value "0" indicates white (the lowest density), and a pixel value "1" indicates black (the highest density). Further, a result of performing a hatching processing by the hatching circuit 250 on the input image data is output as output image data. The memory H stores, as hatching pattern data, positions of respective pixels constituting a hatching pattern (for each of the plural shape-images) which is employed in hatching processing.

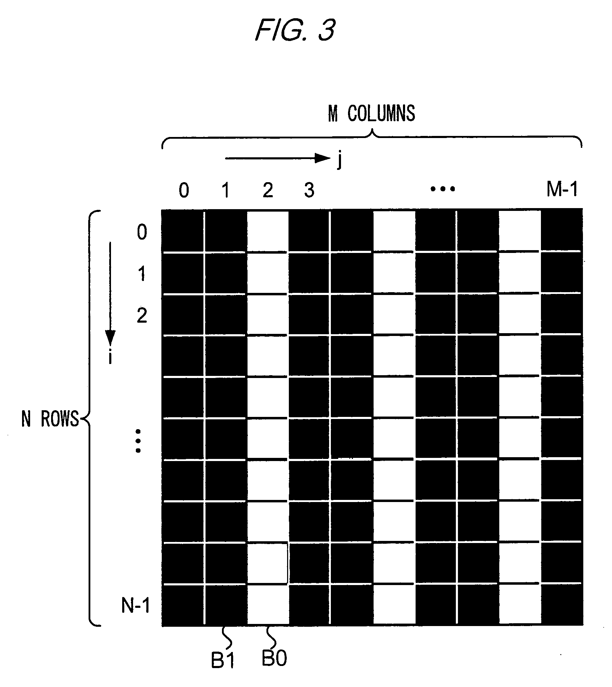

FIG 3 schematically shows hatching pattern data for performing hatching of a vertically-striped pattern.

This hatching pattern data expresses each of the plural shape-images by using binary pattern bit values "0" and "1". In FIG 3, a pattern bit value "0" is provided at each of the positions of pixels forming white blocks B0, and a pattern bit value "1" is provided at each of the positions of pixels forming black blocks B1. The size of the entire hatching pattern is the same as the size of an image equivalent to one page which is maintained on the VRAM 14. Each of the blocks B0 and B1 is constituted of plural pixels (for example, 16 x 16 = 256 pixels). To simplify the descriptions of the exemplary embodiment, however, each block is supposed to be constituted of one pixel. On this supposition, the whole length of the hatching pattern in lateral directions corresponds to a number M of pixels (or columns) arrayed in horizontal directions of an image equivalent to one page, in the VRAM 14. The whole length of the hatching pattern in vertical directions corresponds to a number N of pixels (rows) arrayed in vertical directions of an image equivalent to one page, in the VRAM 14.

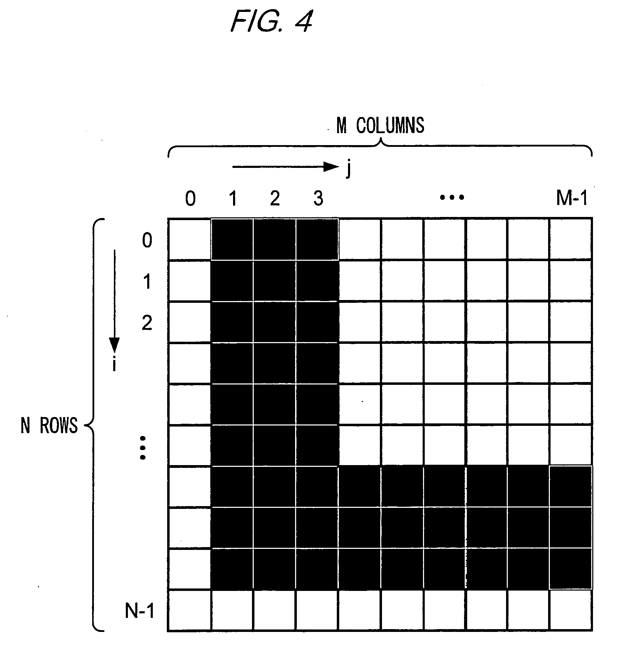

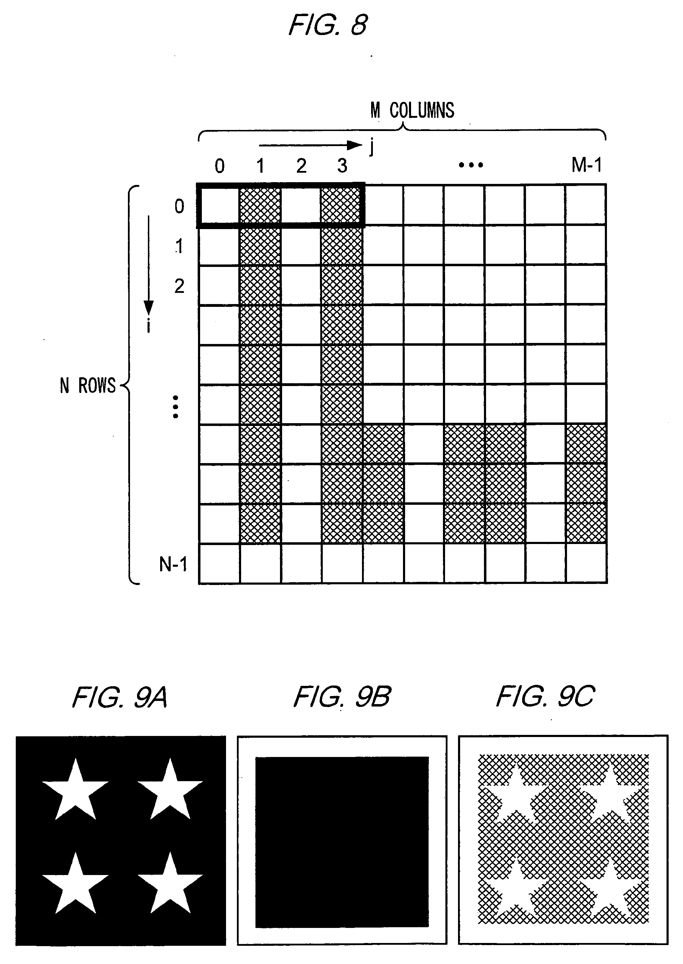

In the description made below, position coordinates of a pixel positioned at the upper left corner of hatching pattern data are set to (0, 0). Position coordinates of a pixel defined by row (i) in a downward direction and a column (j) in a rightward direction from the pixel (0, 0) are expressed as (i, j). Accordingly, for example, a first pixel in the rightward direction from the pixel at the position coordinates (0, 0) is a pixel at position coordinates (0, 1), and a second pixel in the downward direction from the pixel at the position coordinates (0, 0) is a pixel at position coordinates (2, 0). Such a method of expressing position coordinates of pixels is not limited to the hatching pattern data shown in FIG 3 but also applies to input image data (e.g., shown in FIG 4 later) input to the hatching circuit 250, and to output image data (e.g., shown in FIG 8 later) output from the hatching circuit 250.

The following descriptions will be made again in relation to FIG 2.

The hatching color register R0 stores color information expressing a color of each pixel at the position of the pattern bit value "0" in the hatching pattern data. In this case, color information "C0" expressing blue is supposed to be stored. The hatching color register R1 stores color information expressing a color of each pixel at the position having the pattern bit value "1" in the hatching pattern data. Color information includes information which specifies a color, and a gradation value of the color. However, in the exemplary embodiment, only two values are supposed as gradation values included in color information, and the two values respectively indicate presence and absence of a color expressed by color information. When color information "C0" is expressed, the color "blue" is indicated, and at the same time, the presence of a blue pixel is indicated. When color information "C1" is expressed, the color "yellow" is indicated, and at the same time, the presence of a yellow pixel is indicated.

A selector S0 is input along with color information "C0" stored in the hatching color register R0 as well as with color information "C1" stored in the hatching color register R1. The selector S0 is sequentially input with pattern bit values included in the hatching pattern data stored in the memory H, as a selection signal, in accordance with an order of position coordinates of pixels as described above. The selector S0 selects and outputs color information "C0" during a period in which the pattern bit value "0" is input as the selection signal. During a period in which the pattern bit value "1" is input as the selection signal, the selector S0 selects and outputs color information "C1".

The memory H described above functions as a first storage unit which stores positions of respective pixels constituting a hatching pattern. The hatching color registers R0 and R1 each function as a second storage unit which stores color information indicating colors of the hatching pattern, as pixel values of respective pixels constituting the hatching pattern. Further, the selector S0 functions as a color information output unit which outputs color information stored in the hatching color registers R0 and R1, as pixel values of pixels at respective positions, which are stored in the memory H. In brief, the memory H, hatching color register R0 and R1, and selector S0 operate in cooperation with each other to function as a storage unit which stores positions of respective pixels constituting a hatching pattern, and pixel values of the respective pixels.

The selector S1 is input along with pixel value "0" (white) or pixel value "1" (black) included in input image data, and a value "0". Pixel values included in the input image data are sequentially input in accordance with the order of position coordinates of pixels as described above. The selector S1 is also input with each of the pattern bit values included in the hatching pattern data stored in the memory H. The selector S1 is simultaneously input with a pixel value and a pattern bit value at a corresponding position. The term "corresponding position" refers to position coordinates of pixels common to those pixels shown in FIG 3. The selector S1 outputs a value "0" during a period in which "0" is input as a selection signal. During a period in which pixel value "1" is input as a selection signal, the selector S1 selects and outputs "0" or "1" as a pixel value of input image data. That is, if a pixel value included in input image data is "1" (which is a value other than 0) and if a pattern bit value at a corresponding position in hatching pattern data stored in the memory H is "0" (which is a predetermined value), the selector S1 functions as a conversion unit which converts the pixel value "1" included in the input image data into "0" and outputs the converted value "0". If the pixel value included in the input image data is "0" or if the pixel value included in the input image data is "1" (which is a value other than 0) and if a pattern bit value at a corresponding position in hatching pattern data stored in the memory H is "1" (which is a value other than the predetermined value), the selector S1 functions as a conversion unit which directly outputs the pixel value included in the input image data. The pixel value "0" or "1" included in the input image data will be referred to as " α " in the description below.

The multiplier MU0 is a first multiplication unit, and multiplies color information "C0" or "1" output from the selector S0 by the pixel value "α" output from the selector S 1, for each corresponding pixel position. The term "corresponding pixel position", refers to position coordinates of pixels identical to those of pixels shown in FIG. 3. That is, the multiplier MU0 is input with "C0" or "C1" and " α " and outputs " α x C0" or " α x C1".

The subtracter SU is input with a value "α", as a pixel value at each position which is output from the selector S1, and a value "1". The subtracter SU reduces "α" from the value "1", and outputs obtained "1 - α" as "β". Accordingly, if "α" = "1", the subtracter SU inverts "1", and outputs "0". If "α" = "1", the subtracter SU inverts "0", and outputs "1". That is, the subtracter SU functions as an inversion unit which inverts pixel values expressed as binary values.

The background color register R2 stores color information indicating a color of an unspecified area when an image expressed by input image data is displayed on the memory liquid crystal display 15 (i.e., a color of a background area which forms a background behind an image based on the input image data, for example, white). The image processing circuit 25 is configured so as to draw an image expressed by the input image data, overlapped on a background area of a predetermined color. Therefore, the background color register R2 stores color information of the background area. Hereinafter, color information described above will be referred to as "background color information".

The multiplier MU1 is a second multiplication unit, and multiplies "β" output from the subtracter SU by background color information supplied from the background color register R2, for each corresponding pixel position. That is, "β x background color information" is output as color information from the multiplier MU1.

The adder AD adds up "α x C0" or "α x C1" output from the multiplier MU0 and "β x background color information" output from the multiplier MU1, for each corresponding pixel position. The adder AD outputs an addition result as output image data. That is, the adder AD outputs color information "α x C0 + β x background color information" or "α x C1 + β x background color information", as color information included in output image data.

Next, an operation of the hatching circuit 250 will be specifically described.

FIG 4 shows an image expressing an image of the letter "L", as an example of an image expressed by input image data which is input to the hatching circuit 250. This image is constituted of M pixels (or columns) arrayed in horizontal directions x N pixels (or rows) arrayed in vertical directions, as the hatching pattern shown in FIG 3. Pixel values of respective pixels are "0" for a white part in the figure and "1" for a black part. Areas where pixel values are "1" form the specified areas where an image of the letter "L" is drawn. Areas where pixel values are "0" form unspecified areas where the text image is not drawn. Description made below exemplifies an operation in a case where such input image data is input to the hatching circuit 250.

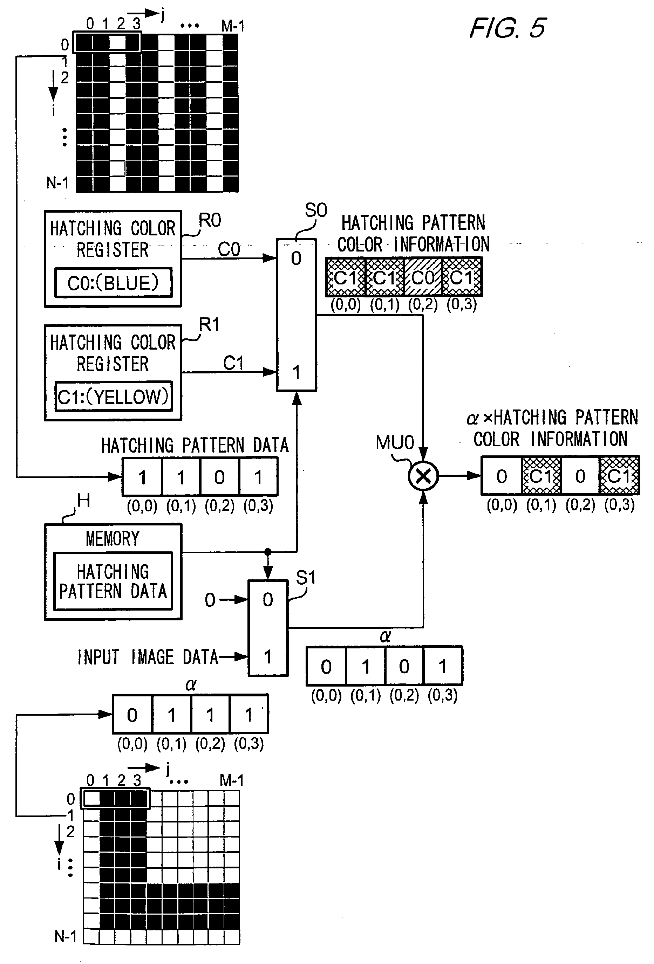

At first, operations of the selectors S0 and S1 and the multiplier MU0 will be described with reference to FIG 5.

Pixel values of input image data shown in FIG 4 are input as "α" into the hatching circuit 250 in accordance with the order of position coordinates. For example, the pixel value of a pixel at position coordinates (0, 0) of input image data is "0", and this value "0" is input first as " α". Subsequently, a value "1" is input as "α" since the pixel value of a pixel at position coordinates (0, 1) of the input image data is "1". Similarly, a value "1" is input again as "α" since the pixel value of a pixel at position coordinates (0, 2) is "1". A value "1" is input yet again as "α" since the pixel value of a pixel at position coordinates (0, 3) is "1". In this manner, pixel values on an uppermost row of the input image data shown in FIG 4 are all sequentially input as "α" into the hatching circuit 250 in an order of position coordinates (0, 0), (0, 1), (0, 2), (0, 3), ..., to (0, M - 1). Thereafter, pixel values at position coordinates (1, 0), (1, 1), (1, 2), ..., (1, M - 1) on the second uppermost row are sequentially input as "α" into the hatching circuit 250. FIG 5 exemplifies a state of sequentially inputting pixel values "0", "1", "1", and "1" of pixels at position coordinates (0, 0), (0, 1), (0, 2), and (0, 3).

The selector S 1 is input with the pixel value "α" included in the input image data, and a value "0", as input signals. The selector S 1 is also supplied with hatching pattern data read from the memory H, as a selection signal. For example, if a pixel value at position coordinates (0, 0) included in the input image data is input as an input signal, a pattern bit value at the position coordinates (0, 0) is input as a selection signal. Subsequently, if a pixel value at position coordinates (0, 1) included in the input image data is input as an input signal, a pattern bit value at the position coordinates (0, 1) is input as a selection signal. In this manner, input signals and selection signals are sequentially input. The selector S1 selects and outputs a value "0" during a period in which "0" is input as a selection signal. During a period in which "1" is input as a selection signal, the selector S1 selects and outputs a pixel value of the input image data. For example, if hatching pattern data as shown in FIG 3 is stored in the memory H, the pattern bit value is "1" for the pixel at position coordinates (0, 0) in the hatching pattern data, and the selector S1 therefore outputs "0" which is a pixel value in the input image data. Similarly, the pattern bit value is "1" for the pixel at position coordinates (0, 1) in the hatching pattern data, and the selector S1 therefore outputs "1" which is a pixel value in the input image data. Subsequently, the pattern bit value is "0" for a pixel at position coordinates (0, 2) in the hatching pattern data, and the selector S1 therefore outputs a value "0". Further, the pattern bit value is "1" for a pixel at position coordinates (0, 3), and the selector S 1 therefore outputs "1" as a pixel value in the input image data. The pixel values "α" output from the selector S1 are sequentially supplied to the multiplier MU0.

In parallel with input operations described above, the selector S0 is input with color information "C0" read from the hatching color register R0, and color information "C1" read from the hatching color register R1, as input signals. The selector S0 is also input with hatching pattern data read from the memory H as a selection signal. During a period in which "0" is input as a selection signal, the selector S0 selects and outputs color information "C1" during a period in which "1" is input as a selection signal. For example, if the hatching pattern data as shown in FIG 3 is stored in the memory H, a pattern bit value "1" is given for the pixel at position coordinates (0, 0) in the hatching pattern data, and the selector S0 therefore outputs color information "C1" for this pixel. Similarly, for the pixel at position coordinates (0, 1) in the hatching pattern data, a pattern bit value "1" is given, and the selector S0 therefore outputs color information "C1". Subsequently, for the pixel at position coordinates (0, 2) in the hatching pattern data, a pattern bit value "0" is given, and the selector S0 outputs color information "C0". Further, for the pixel at position coordinates (0, 3) in the hatching pattern data, the pattern bit value "1" is given, and the selector S0 therefore outputs color information "C1" in the same manner as described above. Color information output from the selector S0 is sequentially supplied to the multiplier MU0.

The multiplier MU0 multiplies the pixel value "α" of each pixel by "C0" or "C1" supplied from the selector S0 for each corresponding pixel position, and outputs "α x C0" or "α x C1". For example, for the pixel at position coordinates (0, 0), "α" is "0" and color information is "C1", so that the multiplier MU0 outputs a value 0 x C1 = "0". Subsequently, for the pixel at position coordinates (0, 1), "α" is "1" and color information is "C1", so that the multiplier MU0 directly outputs color information "C1" supplied from the selector S0. Similarly, for the pixel at position coordinates (0, 2), "α" is "0", and the multiplier MU0 therefore outputs a value "0". For the pixel at position coordinates (0, 3), "α" supplied from the selector S0 is "1", and the multiplier MU0 therefore outputs directly color information "C1" supplied from the selector S0. That is, if a pixel has a pixel value "0" in input image data, i.e., if a pixel is in an unspecified area where no text image is drawn, "α" is pixel value "0" , and the multiplier MU0 therefore outputs a pixel value "0" from the multiplier MU0. Further, if a pixel has a pixel value "1" in input image data, i.e., if a pixel is in a specified area where a text image is drawn and if a pattern bit value is "0" at a corresponding pixel position in hatching pattern data, "α" is pixel value "0", and the multiplier MU0 therefore outputs a pixel value "0" from the multiplier MU0. On the other hand, if a pixel has a pixel value "1" in input image data, i.e., if a pixel is in a specified area where a text image is drawn and if a pattern bit value is "1" at a corresponding pixel position in hatching pattern data, "α" is pixel value "1", and the multiplier MU0 therefore outputs color information "C1" of the pattern bit value. Accordingly, "α x C0" or "α x C1" output from the multiplier MU0, which is "α x color information of hatching pattern data", is supplied to the adder AD.

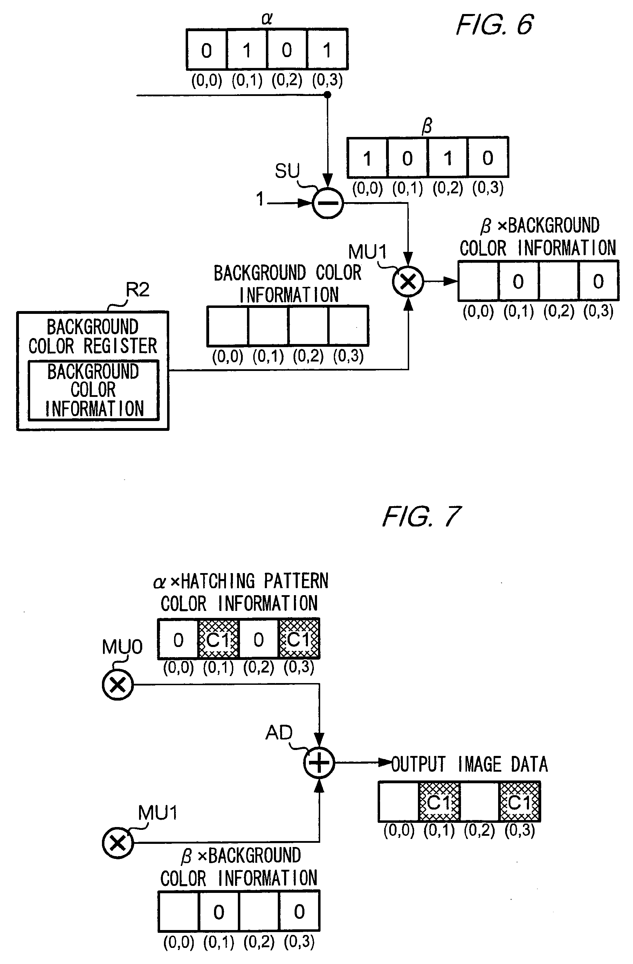

Next, operations of the subtracter SU and the multiplier MU1 will be described with reference to FIG 6.

The pixel values "α" at respective positions are supplied not only to the multiplier MU0 as described above but also to the subtracter SU. The subtracter SU is input with "α" and "1", and outputs "1 - α" obtained by subtracting "α" from "1". For example, for the pixel at position coordinates (0, 0), "α" is "0", and the subtracter SU therefore outputs 1 - 0 = "1" as "β". Subsequently, for the pixel at position coordinates (0, 1), "α" is "1", and the subtracter SU therefore outputs 1 - 1 = "0" as "β". Similarly, for the pixel at position coordinates (0, 2), "α" is "0", and the subtracter SU therefore outputs a value "1" as "β". For the pixel at position coordinates (0, 3), "α" is "1", and the subtracter SU therefore outputs a value "0" as "β". "β" which is output from the subtracter SU is supplied to the multiplier MU1.

The multiplier MU1 is supplied with "β" from the subtracter SU and is also supplied with background color information from the background color register R2. The multiplier MU1 outputs "β x background color information" obtained by multiplying "β" by the background color information, for each corresponding pixel position. That is, if a pixel has a pixel value "0" in input image data, i.e., if a pixel is in an unspecified area on which no text image is drawn, "β" is pixel value "1" , and the multiplier MU1 directly outputs the background color information. If a pixel has a pixel value "1" in the input image data, i.e., if a pixel is in a specified area in which a text image is drawn and if a pattern bit value is "0" at a corresponding pixel position in hatching pattern data, " β" is pixel value "1", and the multiplier MU1 therefore outputs directly the background color information. On the other hand, if a pixel has a pixel value "1" in the input image data, i.e., if a pixel is in a specified area in which a text image is drawn and if a pattern bit value is "1" at a corresponding pixel position in the hatching pattern data, "β" is pixel value "0", and the multiplier MU1 outputs a value "0".

For example, for the pixel at position coordinates (0, 0), "β" supplied from the subtracter SU is "1", and the multiplier MU1 therefore directly outputs the background color information supplied from the background color register R2. Subsequently, for the pixel at position coordinates (0, 1), "β" supplied from the subtracter SU is "0", and the multiplier MU1 therefore outputs a value "0". Similarly, for the pixel at position coordinates (0, 2), "β" supplied from the subtracter SU is "1", and the multiplier MU1 therefore outputs directly the background color information supplied from the background color register R2. For the pixel at position coordinates (0, 3), "β" supplied from the subtracter SU is "0", and the multiplier MU1 therefore outputs a value "0". "β x background color information" which is output from the multiplier MU1 is supplied to the adder AD.

Next, an operation of the adder AD will be described with reference to FIG 7.

The adder AD outputs a value "α x hatching pattern color information + β x background color information" which is obtained by adding "α x hatching pattern color information" supplied from the multiplier MU0 to "β x background color information" supplied from the multiplier MU1, for each corresponding pixel position. For example, for the pixel at position coordinates (0, 0), the value "α x hatching pattern color information" supplied from the multiplier MU0 is "0", and the value "β x background color information" supplied from the multiplier MU1 is "background color information". Therefore, the adder AD outputs the "background color information". Subsequently, for the pixel at position coordinates (0, 1), the value "α x hatching pattern color information" is "C1", and the value "β x background color information" is "0". The adder AD therefore outputs the hatching pattern color information "C1". Similarly, for the pixel at position coordinates (0, 2), the value "α x hatching pattern color information" is "0", and the value "β x background color information" is "background color information". The adder AD therefore outputs the "background color information". For the pixel at position coordinates (0, 3), the value "α x hatching pattern color information" is "C1", and the value "β x background color information" is "0". The adder AD therefore outputs the hatching pattern color information "C1". That is, if "1" is a pattern bit value in a hatching pattern as shown in FIG 3 at a position corresponding to a pixel in a specified area in an input image as shown in FIG 4, color information of the pixel in the specified area is substituted with "C1". On the other hand, if a pixel is in an unspecified area in which no text image is drawn, or if a pixel is in a specified area on which a text image is drawn and if a pattern bit value is "0" at a corresponding pixel position in the hatching pattern data, color information of the pixel is substituted with background color information. In this manner, a result of carrying out addition by the adder AD is output as output image data. The output image data output from the adder AD is temporarily stored into the VRAM 14, and is thereafter interpreted by the display control device 16. The interpreted data is displayed as an image on the memory liquid crystal display 15.

FIG 8 shows an output image displayed on the memory liquid crystal display 15 on the basis of output image data.

As shown in the figure, the output image is subjected to hatching so that a background image is seen through an area having a pattern bit value "0" in the hatching pattern shown in FIG 3 in a specified area of an image of the letter "L" expressed by the input image data shown in FIG 4. That is, if the pattern bit value is "1" at each of the corresponding positions in the hatching pattern data shown in FIG 3 to those of the pixels in the specified area of the image of the letter "L" expressed by the input image data shown in FIG 4, color information of those pixels indicates the color yellow at those positions. If the pattern bit value is "0" at each of the corresponding positions in the hatching pattern data shown in FIG 3 to pixels in the specified area, color information of those pixels indicates white of a background image. Further, the unspecified areas of the text image are not hatched, and therefore, color information of pixels in these areas also indicates white of the background image. For example, it is supposed that a color of a pixel at position coordinates (0, 0) is white as a background color. A color of a pixel at position coordinates (0, 1) is yellow expressed by color information "C1" of a hatching pattern. Further, a color of a pixel at position coordinates (0, 2) is white as a background color. A color of a pixel at position coordinates (0, 3) is yellow expressed by color information "C1" of the hatching pattern.

According to the exemplary embodiment described above, the hatching processing can be performed so that plural shape-images are arrayed only in specified areas of an image expressed by input image data and a background image is seen through parts of the specified area. In addition, only specified areas where a letter is drawn in an input image can be hatched by simply using a circuit having a relatively simple structure which is constituted only of registers, selectors, multipliers, an adder, and a subtracter. Accordingly, there is no effort required for specifying every one of the position coordinates or memory addresses of areas as targets to be hatched. Further, hatching of a desired color can be achieved by merely storing desired colors in the hatching color registers R0 and R1. In the above exemplary embodiment, a color stored in the hatching color register R0 is not used. However, the color stored in the hatching color register R0 is used in a modification 3 which will be described later, and therefore, a later description should be referred to regarding details of the hatching color register R0.

Although an exemplary embodiment has been described above, content of the exemplary embodiment can be modified as follows. Further, modifications described below may be appropriately combined with each other.

1. In the above exemplary embodiment, details of a hatching processing has been described referring to an example in which hatching pattern data expressing a hatching pattern of a vertically-striped pattern as shown in FIG 3 is stored in the memory H, and input image data expressing an image of the letter "L" as shown in FIG 4 is input. However, content of the input image and the hatching pattern are not limited to that described in the exemplary embodiment.

For example, it may be supposed that the memory H stores hatching pattern data expressing a star-shaped hatching pattern shown in FIG 9A and input image data expressing a rectangular shape shown in FIG 9B is input. In this case, a hatching processing is performed only on an area where the rectangular shape is drawn, and each pixel having a pattern bit value "0" (corresponding to each pixel in white areas of the star shapes in the figure) in the hatching pattern has the same color as the background color. Therefore, the hatching circuit 250 outputs output image data as shown in FIG 9C in which a hatching processing is performed on the area where the rectangular shape is drawn, so that a background image is seen though areas cut out by star-shaped hatching patterns. Thus, as content of an input image or a hatching pattern is changed and the hatching circuit 250 is capable of performing various hatchings depending on the changed content.

2. In the above exemplary embodiment, gradation values of color information are taken as being two values which respectively indicate presence and absence of a color indicated by color information. Therefore, color information of a hatching pattern directly means a color itself and the presence of the color. However, if the memory liquid crystal display 15 is capable of expressing one color in three or more gradations, color information includes information which directly specifies a color and a gradation value of the color.

3. In the above exemplary embodiment, a hatching pattern is expressed by two values including "0" and "1". The method of expressing a hatching pattern is not limited to the embodiment. For example, a hatching pattern may be expressed by two values of "0" (a predetermined value) and "15" (a value other than the predetermined value). In this case, the hatching color register R1 contains color information expressing a color of pixels at positions where the pattern bit value "15" exists in the hatching pattern data. Further, the selector S1 selects and outputs a value "0" during a period in which "0" (the predetermined value) is input as a selection signal. The selector S1 selects and outputs a pixel value "α" of input image data during a period in which "15" (the value other than the predetermined value) is input as a selection signal.

Otherwise, pattern bit values of the hatching pattern may be expressed by three or more values. In this case, in place of the selector S0, a selector having three inputs and one output converts a pixel value included in input image data into "0" and outputs "0" if a pattern bit value is a first value (a predetermined value) and if the pixel value included in the input image data is a value other than "0". If a pattern bit value is a second value (a value other than the predetermined value) or a third value (a value other than the predetermined value), the selector directly outputs the pixel value included in the input image data. For example, it is supposed that the hatching color register R0 stores color information "C0" expressing a color of pixels at positions where the second value exists, and the hatching color register R1 stores color information "C1" expressing a color of pixels at positions where the third value exists. In this case, if the first value is a pattern bit value at a corresponding position in a hatching pattern data to a pixel in a specified area of a text image expressed by input image data, the pixel is white as expressed by a background color forming a background image. If the second value is a pattern bit value at a corresponding position in the hatching pattern data to a pixel in a specified area of a text image expressed by input image data, the pixel is blue as expressed by color information "C0" of the hatching pattern at the position. If the third value is a pattern bit value at a corresponding position in the hatching pattern data, the pixel is yellow as expressed by color information "C1" of the hatching pattern at the position.

4. In the above exemplary embodiment, the inversion unit that inverts binary input image data is constituted of the subtracter SU. However, the inversion unit is not limited to the subtracter SU but may be configured so as to, for example, take binary input image data as a selection signal, and so as to select and output an input signal "0" when the selection signal "1" is input or select and output an input signal "1" when a selection signal "0" is input.

The input image data need not be data constituted of two values of "1" and "0" but may be two values of "0" and an integer other than "0", such as "0" and "15". In this case, if the multiplier MU0 directly multiplies the integer other than "0" by color information of a hatching pattern, color information of the hatching pattern is multiplied by the integer. Hence, color information of the hatching pattern needs to be multiplied beforehand by "1 / integer", or the integer needs to be divided by the integer before the integer is input to the multiplier MU0. The input image data needs only to be binary data at a point of time when the input image data is input into the hatching circuit 250 shown in FIG 2. If an image is originally expressed as multi-valued data, the multi-valued data may be converted first into binary data, which may then be input into the hatching circuit 250.

5. In the above exemplary embodiment, the hatching circuit 250 performs a hatching processing so as to allow a background image to be seen through areas cut out by a hatching pattern in only specified areas expressed by input image data. In this respect, the hatching circuit 250 may operate in a specified operation mode, i.e., either a transparent mode or a non-transparent mode. If the transparent mode is specified, the same processing as in the above exemplary embodiment is carried out. If the non-transparent mode is specified, pixel values of input image data are not converted but a hatching of a color indicated by hatching pattern color information may be performed only on specified areas of an image expressed by the input image data.

FIG 10 shows a structure of the hatching circuit 251 according to the modification described above. The hatching circuit 251 is additionally provided with an operation mode specifying register R3 and a selector S2. The other features of the structure are the same as those of the hatching circuit 250.

The operation mode specifying register R3 stores a selection signal for specifying either a non-transparent mode or a transparent mode as an operation mode of the hatching circuit 251. In this example, a selection signal for specifying the non-transparent mode is "0" and a selection signal for specifying the transparent mode is "1". That is, the operation mode specifying register R3 functions as a specifying unit which specifies either the transparent mode or the non-transparent mode as an operation mode. The selection signal stored in the operation mode specifying register R3 may be rewritten by the CPU 11, on the bases of a manipulation of a key 22 by a user. The selector S2 is input with, as input signals, a value "1" and pattern bit values included in hatching pattern data stored in the memory H sequentially in an order of position coordinates of pixels, as described above. The selector S2 is also input with a selection signal stored in the operation mode specifying register R3. When "0" is input as a selection signal for specifying the non-transparent mode, the selector S2 then selects and outputs a value "1". On the other hand, when "1" is input as a selection signal for specifying the transparent mode, the selector S2 selects and outputs pattern bit values included in the hatching pattern data supplied from the memory H. The selector S 1 is input with either the value "1" output from the selector S2 or each of the pattern bit values included in the hatching pattern data, as a selection signal. That is, when the transparent mode is specified, the selector S 1 is input with each of the pattern bit values included in the hatching pattern data, as a selection signal, from the selector S2. The selector S1 therefore operates in the same manner as in the above exemplary embodiment. In contrast, when the non-transparent mode is specified, the value "1" is input as a selection signal from the selector S2. Therefore, the selector S1 directly outputs the pixel value "α" included in the input image data. In this case, in a specified area of an image expressed by input image data, pixels at positions corresponding to pixels having a pattern bit value "0" in hatching pattern data are the color blue as expressed by color information "C0". Pixels at positions corresponding to pixels having a pattern bit value "1" are the color yellow as expressed by color information "C1". That is, the specified area of the text image shown in FIG 4 is painted with a vertically striped pattern constituted of blue and yellow stripes, corresponding to the hatching pattern shown in FIG 3.

Specifically, the selector S 1 functions as a conversion as follows.

At first, if the non-transparent mode is specified by the operation mode specifying register R3, the selector S 1 directly outputs pixel values included in the input image data. If the transparent mode is specified by the operation mode specifying register R3, if a pixel value included in the input image data is "1", and if a pattern bit value is "0" at a corresponding position in the hatching pattern data stored in the memory H, the selector S 1 converts a pixel value included in the input image data into "0" and outputs "0". If the transparent mode is specified by the operation mode specifying register R3 and if a pixel value included in the input image data is "0", the selector S1 directly outputs the pixel value included in the input image data. If the transparent mode is specified by the operation mode specifying register R3, if a pixel value included in the input image data is "1", and if a pixel value at a corresponding position in the hatching pattern data stored in the memory H is "1", the selector S1 directly outputs the pixel value included in the input image data.

6. Areas other than hatching target areas form, in brief, a background area. Background color information stored in the background color register R2 may be used as image data to be displayed in the background area, as in the above exemplary embodiment, or input image data which is input into the hatching circuit 250 may be used as the image data to be displayed in the background area. In the latter case, the circuit configuration of the exemplary embodiment may be arranged so that the multiplier MU1 is supplied with input image data in place of the background color information read from the background color register R2. With such a circuit configuration, the color of the background area in an output image can be the same as that of the background area in an input image.

Alternatively, either the background color information stored in the background color register R2 or the input image data input into the hatching circuit 250 may be specified.

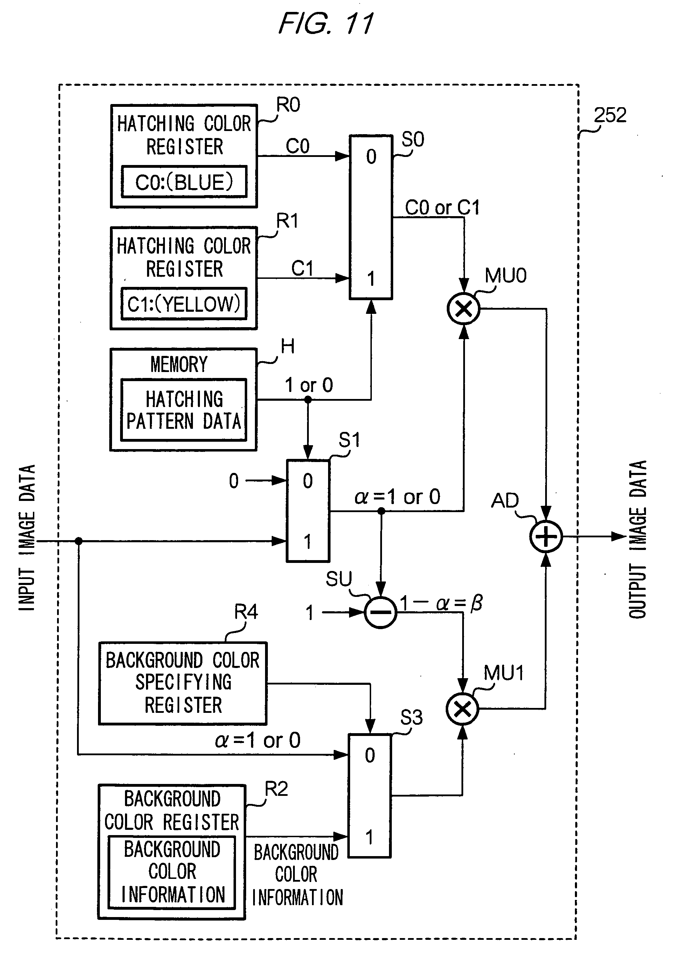

FIG 11 shows a hatching circuit 252 to describe this case. The hatching circuit 252 is additionally provided with a background color specifying register R4 and a selector S3. The other features of the structure are the same as those of the structure of the hatching circuit 250 shown in FIG 2. The background color specifying register R4 stores a selection signal for specifying either the pixel value "α" at each position in input image data or background color information stored in the background color register R2. That is, the background color specifying register R4 functions as a specifying unit that specifies either a pixel value at each pixel position included in binary input image data or a pixel value at each pixel position included in background color information. A selection signal stored in the background color specifying register R4 may be rewritten by the CPU 11 on the basis of a manipulation of key 22, by a user. The selector S3 is input with, as input signals, the pixel value "α" of input image data, and background color information stored in the background color register R2. The selector S3 is input with a selection signal stored in the background color specifying register R4. When a selection signal specifying the pixel value "α" ("0" in this case) at each position in input image data is input, the selector S3 then selects and outputs the pixel value "α" in the input image data. On the other hand, when a selection signal specifies background color information ("1" in this case) stored in the background color register R2, the selector S3 selects and outputs the background color information. That is, the selector S3 functions as a supply unit which supplies a multiplier MU2 as a second multiplication unit with the pixel value specified by the background color specifying register R4. Accordingly, a color of an unspecified area in an input image or a background color can be specified as a color of a background area in an output image.

7. In the above exemplary embodiment, image data stored in the VRAM 14 is displayed on the memory liquid crystal display 15 by the display control device 16. In this respect, image data subjected to a hatching processing may be used for printing. For example, output image data which is output from the adder AD may be written into the RAM 13, and may be further provided for a printing unit as image data equivalent to an image to be printed on a sheet of paper. The printing unit carries out printing in accordance with the supplied image data, and forms an image expressed by the image data, onto a paper sheet.

8. In the above exemplary embodiment, background color information stored in the background color register R2 is directly supplied to the multiplier MU1. If background color information is also stored in the VRAM 14 in addition to the background color register R2, the background color information in the VRAM 14 or the register R2 may be selected and supplied to the multiplier MU1.

FIG 12 shows a structure of a hatching circuit 253 according to the modification. The hatching circuit 253 is additionally provided with a background color specifying register R5 and a selector S4. The other features of the structure are the same as those of the structure of the hatching circuit 250 shown in FIG 2. The background color specifying register R5 stores a selection signal for specifying either the first background color information stored in the background color register R2 or background color information stored in the VRAM 14. That is, the background color specifying register R5 functions as a specifying unit that specifies either the background color register R2, which stores the predetermined first background color information, or the VRAM 14 on which image information to be output to the memory liquid crystal display 15 is developed. The selection signal stored in the background color specifying register R5 may be rewritten by the CPU 11, on the basis of a manipulation of key 22, by a user. The selector S4 is input with, as input signals, the first background color information stored in the background color register R2 and the second background color information stored in the VRAM 14. The selector S4 is also input with the selection signal stored in the background color specifying register R5. When a selection signal ("0" in this case) specifying the background color register R2 is input, the selector S4 then selects and outputs the first background color information read from the background color register R2. On the other hand, when a selection signal ("1" in this case) specifying the VRAM 14 is input, the selector S4 then selects the second background color information read from the VRAM 14. That is, the selector S4 functions as a supply unit which reads information stored in a storage specified by the background color specifying register R5, i.e., information stored in the background color register R2 or in the VRAM 14, as a pixel value included in the background color information. The selector S4 as such a supply unit supplies the multiplier MU1 as a second multiplication unit with the read information.

If an image is output (or displayed or printed) by a display unit or a printing unit, image information of the output image is developed on a storage unit such as the RAM 13, and is supplied to the display unit or the printing unit after having been temporarily stored into the RAM 13. Image information of the output image stored in the RAM 13 may be used as background color information in the exemplary embodiment. In this case, the background color specify register R5 functions as a specify unit which specifies either the background color register R2 storing the predetermined first background color information or the RAM 13 storing image information of an output image. Further, the selector S4 functions as a supply unit which reads the background color information or the image information stored in the storage unit specified by the background color specifying register R5 (in brief, the background color register R2 or the RAM 13) as a pixel value of the background color information in the exemplary embodiment. The selector S4 as such a supply unit supplies the multiplier MU1 as a second multiplication unit with the read information. Accordingly, a storage unit such as the RAM 13 can be selected as a supply source of background color information.

9. In the above exemplary embodiment, the hatching circuit 250 is provided in the image processing circuit 25. In this respect, the hatching circuit 250 may alternatively be provided in any other device such as the display control device 16.

10. The hatching circuit 250 may be used in a personal computer device, a mobile phone, or an electronic book which has a display device for displaying images according to image data.

## Claims

1. An image processing circuit comprising:
a storage means for storing positions of pixels constituting a shape-image to be regularly-arranged and pixel values of the pixels;
a conversion means for:
if a pixel value of a first pixel constituting an image represented by input binary image data, the pixel value of the first pixel being expressible by one value or another value, one of the values being 0, and a pixel value of a second pixel constituting the shape-image and arranged at a position corresponding to a position of the first pixel is a predetermined value, converting the pixel value of the first pixel into 0 and outputting a pixel value 0; and
if the pixel value of the first pixel is 0, or if the pixel value of the first pixel is a value other than 0, and the pixel value of the second pixel is a value other than the predetermined value, directly outputting the pixel value of the first pixel;
a first multiplication means for multiplying the pixel value of the second pixel by the pixel value output from the conversion means, and outputting a resultant value;
an inversion means for inverting the pixel value output from the conversion means and outputting a resultant value;
a second multiplication means for multiplying the pixel value of the first pixel or a pixel value of a third pixel constituting a background part of the image represented by the binary image data by the value output from the inversion means, and outputting a resultant value; and
an adding means for adding up the value output from the first multiplication means and the value output from the second multiplication means, and outputting a resultant value as output image data.

2. The image processing circuit according to Claim 1, further comprising an operation mode specifying means for specifying a transparent mode or a non-transparent mode as an operation mode, wherein the conversion means:
if the non-transparent mode is specified by the operation mode specifying means, directly outputs the pixel value of the first pixel;
if the transparent mode is specified by the operation mode specifying means, and if the pixel value of the first pixel is a value other than 0, and the pixel value of the second pixel is the predetermined value, converts the pixel value of the first pixel into 0 and outputs a pixel value 0; and
if the transparent mode is specified by the operation mode specifying means, and if the pixel value of the first pixel is 0, or if the pixel value of the first pixel is a value other than 0, and the pixel value of the second pixel is a value other than the predetermined value, directly outputs the pixel value of the first pixel.

3. The image processing circuit according to Claim 1, wherein the storage means comprises:
a first storage means for storing the pixel values of the pixels constituting the shape-image;
a second storage means for storing color information indicating a color constituting the shape-image as the pixel values of the pixels;
a color information output means for outputting the color information stored in the second storage means, as the pixel value of the second pixel.

4. The image processing circuit according to Claim 1, the storage means may comprise:
a first storage means for storing the pixel values of the pixels constituting the shape-image;
a second storage means for storing color information indicating a color constituting the shape-image, the color information being associated with a pixel value; and
a color information output means for outputting the color information stored in the second storage means in association with the pixel value of the second pixel, as the pixel value of the second pixel.

5. The image processing circuit according to Claim 1, further comprising:
a specifying means for specifying the pixel value of the first pixel or the pixel value of the third pixel; and
a supply means for providing the pixel value specified by the specifying means to the second multiplication means.

6. The image processing circuit according to Claim 1, further comprising:
a specifying means for specifying a third storage mean for storing predetermined background color information or a fourth storage for storing image information to be output to a display means or a printing means; and
a supply means for retrieving the information stored in the storage means specified by the specifying means as the pixel value of the third pixel, and providing the information to the second multiplication means.

7. A display device comprising:
the image processing circuit according to Claim 1; and
a display means for displaying an image on the basis of the output image data output from the adding means.

8. A printing device comprising:
the image processing circuit according to Claim 1; and
a printing means for forming an image on a recording medium on the basis of the output image data output from the adding means.
